# FASCICULE DE BREVET EUROPEEN

(11) **EP 2 209 712 B1**
(45) Date de publication et mention de la délivrance du brevet: **04.05.2011**
(21) Numéro de dépôt: 08839369.9
(22) Date de dépôt: 12.09.2008
(51) Int. Cl.: B64C 1/06, B64C 1/12

(54) **AVION COMPORTANT DES JONCTIONS D'ARRÊTS DE RAIDISSEURS ET PROCÉDÉ DE FABRICATION D'UN TEL AVION**
FLUGZEUG MIT VERSTEIFUNGSKANTENVERBINDUNGEN UND VERFAHREN ZUR HERSTELLUNG EINES DERARTIGEN FLUGZEUGES
AIRCRAFT INCLUDING STIFFENER EDGE JUNCTIONS AND METHOD FOR PRODUCING ONE SUCH AIRCRAFT

(30) Priorité: 18.10.2007 FR 0758418
(43) Date de publication de la demande: 28.07.2010
(73) Titulaire: AIRBUS OPERATIONS (S.A.S), 31060 Toulouse (FR)
(72) Inventeur: GAUTHIE, Laurent, F-31170 Tournefeuille (FR); BERNADET, Philippe, F-31770 Colomiers (FR)
(74) Mandataire: Lotaut, Yacine Diaw
(86) Numéro de dépôt international: PCT/FR2008/051630
(87) Numéro de publication internationale: WO 2009/050357

(56) Documents cités:
- EP-A- 1 719 698
- WO-A-2006/001859
- US-A- 5 518 208
- US-A1- 2006 060 705

## Description

La présente invention se rapporte à un avion comportant des jonctions d'arrêts de raidisseurs et à un procédé de fabrication d'un tel avion. Plus particulièrement, l'invention se rapporte à un système de transmission des efforts lors d'une intersection de cadre de renfort et de raidisseur dans un fuselage et au procédé de fabrication d'un tel système. L'invention a pour but de permettre un cheminement d'efforts efficace entre deux sections consécutives d'un raidisseur de l'avion. Un tel raidisseur passe normalement à travers un cadre de renfort de fuselage de l'avion. L'invention a aussi pour but de permettre une fabrication et une installation simples des moyens de cheminement dans le cas d'un raidisseur ayant une section en oméga.

Un fuselage d'avion comporte plusieurs plaques de fuselage montées entre elles afin de former le fuselage. Les plaques de fuselage comportent plusieurs raidisseurs. Les raidisseurs se présentent sous la forme de nervures en surélévation par rapport auxdites plaques. Les raidisseurs s'étendent sur les plaques, dans le fuselage, suivant un axe longitudinal de ce fuselage. Par ailleurs un tel fuselage comporte des cadres de renfort, notamment situés au niveau des jonctions de plaques de fuselage. Ces cadres de renfort sont situés selon un plan perpendiculaire à l'axe longitudinal du fuselage. Il existe donc dans un fuselage de nombreuses zones où les cadres de renfort et les raidisseurs se croisent.

A l'endroit d'une intersection entre un raidisseur et un cadre de renfort, le raidisseur est interrompu afin de laisser la priorité au cadre de renfort. Un tel raidisseur se présente donc sous la forme de plusieurs sections de raidisseurs. Lesdites sections sont alignées et séparées les unes des autres par la présence de cadres de renfort. Cependant, afin de jouer correctement son rôle dans le fuselage d'un appareil, les efforts que subit un raidisseur doivent être transmis d'une section de raidisseur à une autre, malgré la présence des interruptions.

Il est connu dans l'état de la technique, dans le domaine métallique, de rajouter des ferrures aux extrémités des sections de raidisseurs afin de permettre la continuité de la transmission des efforts malgré la présence de cadres de renfort. De telles ferrures prennent appui de chaque côté du cadre de renfort et transmettent, à travers le cadre de renfort, les efforts d'une section de raidisseur à la section suivante, assurant ainsi une continuité des efforts suivant un cheminement simple.

Cependant de telles ferrures sont difficiles à fabriquer dans le cas d'un raidisseur ayant une section transversale en oméga. On entend, par raidisseurs ayant une section transversale en oméga, un raidisseur ayant deux semelles s'étendant parallèlement aux plaques de fuselage et en continuité des extrémités les plus proches des deux semelles, une tête de raidisseur reliant ces deux semelles ensemble. Une telle tête se présente sous la forme d'un voile dont le profil est trapézoïdal ou courbe. Les deux semelles associées à la tête donnent au raidisseur une forme, en coupe transversale, de oméga majuscule (Ω).

De plus les ferrures ne peuvent pas être fabriquées intégralement en matériaux composites. La présence d'éléments métalliques est nécessaire à la fabrication des ferrures. Or, la présence d'éléments métalliques entraîne des problèmes de corrosion ainsi que des problèmes de poids et des problèmes thermique dans le fuselage.

Le document US 2006/0060705 se rapporte à un système de transmission des efforts entre deux sections de raidisseurs, situés chacun sur une plaque de fuselage, les deux plaques étant jointives. Ce système n'a pas pour but de transmettre les efforts de part et d'autre d'un cadre de renfort. Dans ce système, les cadres de renfort sont en appui sur les raidisseurs eux-mêmes.

Il est aussi connu de l'état de la technique, dans les domaines métallique et composite, de créer des doubles plis dans une peau de la plaque. De tels doubles plis contribuent à augmenter la rigidité de la plaque. Le but de ces pliages est de transmettre les efforts d'une section de raidisseur à une autre malgré la présence de cadres de renfort. Cette peau recouvre la paroi interne des plaques de fuselage. De tels plis sont formés grâce à la création d'une couche supplémentaire sous la peau avant l'interruption du raidisseur. Cette couche supplémentaire draine les efforts d'une section de raidisseur avant l'interruption du raidisseur et les transmet à la section suivante du raidisseur. Pour cela, une aile de pli passe sous le cadre de renfort et continue sous l'extrémité de la section suivante du raidisseur pour transmettre les efforts de manière efficace.

Cependant la présence de telles ailes de pli sous le raidisseur implique une variation de l'épaisseur de la peau sur laquelle est fixé le raidisseur. Il est difficile de fabriquer un raidisseur ayant une section transversale en oméga, et adapté à cette variation d'épaisseur de la peau. De plus, le cheminement des efforts d'une section de raidisseur à une autre est complexe, ce qui entraîne une moindre qualité de transmission des efforts que les ferrures.

L'invention a donc pour but de proposer un dispositif permettant un cheminement efficace des efforts entre deux sections d'un raidisseur, sans déperdition excessive d'efforts, pouvant être réalisé en matériaux composites tout en étant simple de fabrication et d'installation.

Pour obtenir une continuité des efforts dans toutes les sections du raidisseur, et ce malgré la présence de cadres de renfort, l'invention prévoit l'adjonction de pièces reliant les extrémités de sections consécutives d'un raidisseur. Plus précisément, l'invention prévoit la présence d'éclisses recouvrant la peau et les extrémités des sections de raidisseurs. Une telle éclisse évite la création de plis dans la peau et donc la présence d'une variation de l'épaisseur de la peau sous le raidisseur.

Par ailleurs, l'invention prévoit qu'une telle éclisse joigne deux sections de raidisseur consécutives en s'étendant sous le cadre de renfort. Une telle jonction, associée au recouvrement du raidisseur, assure un cheminement d'efforts efficace, sans déperdition excessive d'efforts. De plus, une telle éclisse peut aisément être réalisée en matériaux composites, évitant ainsi les problèmes liés à la présence d'éléments métalliques.

Enfin une telle éclisse se présente sous une forme simple, ce qui facilite sa fabrication et son installation dans le fuselage.

L'invention a donc pour objet un avion comportant : des plaques de fuselage ; un raidisseur ayant une section transversale en forme d'oméga, ledit raidisseur s'étendant sur une plaque de fuselage ou sur une peau suivant un axe longitudinal de ce fuselage ; un cadre de renfort situé dans un plan perpendiculaire à l'axe longitudinal du fuselage, le raidisseur étant interrompu à l'intersection de la plaque avec le cadre de renfort, l'interruption du raidisseur séparant ledit raidisseur en deux sections ; au moins une éclisse, cette éclisse recouvrant des extrémités des sections de raidisseur, cette éclisse joignant deux sections de raidisseur consécutives ; caractérisé en ce que l'éclisse est située entre une plaque et le cadre de renfort, ledit cadre prenant appui contre l'éclisse.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une vue en perspective schématique d'une partie de fuselage ;
- Figure 2 : Une vue en perspective schématique d'une partie de fuselage selon un premier mode de réalisation de l'invention ;
- Figure 3 : Une vue en coupe transversale d'une intersection entre un cadre de renfort et un raidisseur selon l'invention ;
- Figure 4 : Une vue en perspective schématique d'une partie de fuselage selon un deuxième mode de réalisation de l'invention ;
- Figure 5 : Une vue en coupe transversale d'un raidisseur et d'une éclisse selon un troisième mode de réalisation de l'invention ;

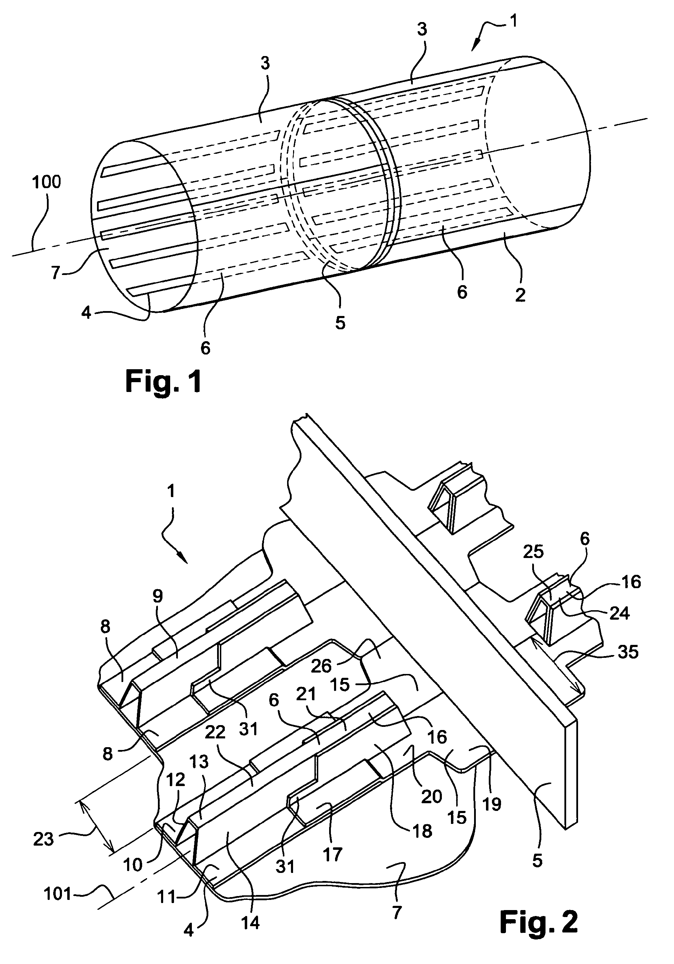

La figure 1 représente une vue en perspective schématique d'une partie de fuselage. Un tel fuselage 1 comporte plusieurs tronçons 2 montés ensemble. Ces tronçons 2 ont une forme générale cylindrique. Un tel tronçon 2 comporte plusieurs plaques 3 de fuselage montées ensemble afin de former le tronçon 2 cylindrique.

Afin d'assurer une certaine solidité à la structure, le fuselage 1 comporte au moins un, en général plusieurs, raidisseur 4. Ces raidisseurs 4 s'étendent parallèlement à un axe 100 longitudinal du fuselage 1. Ces raidisseurs épousent la paroi interne du fuselage 1.

Par ailleurs, un tel fuselage 1 comporte au moins un, en général plusieurs, cadre 5 de renfort. Ces cadres de renfort se présentent sous forme de poutres, lesdites poutres ayant une hauteur suffisante pour garantir une rigidité empêchant au fuselage de subir des déformations importantes.

Ces cadres 5 de renfort épousent la paroi interne du fuselage 1. De tels cadres 5 de renfort se situent selon des plans perpendiculaires à l'axe 100 du fuselage 1. Les raidisseurs 4 s'étendent donc suivant un axe perpendiculaire aux plans suivant lesquels se développent des cadres 5 de renfort.

Afin de laisser la priorité aux cadres 5 de renfort, les raidisseurs 4 sont interrompus à chaque intersection avec un cadre 5 de renfort. Un raidisseur 4 est donc divisé en plusieurs sections 6. Une section 6 d'un raidisseur 4 est donc, soit une section 6 de début ou de fin de raidisseur 4, partant du début ou de la fin du raidisseur 4 et s'arrêtant à l'approche d'un cadre 5 de renfort, soit une section 6 de raidisseur 4 située entre deux cadres 5 de renfort.

Le fuselage 1 peut comporter une peau 7, qui recouvre tout ou partie de la paroi interne du fuselage 1, c'est-à-dire la paroi interne des plaques 3. Dans ce cas, les raidisseurs 4 peuvent être fixés sur la peau 7 au lieu d'être fixés directement sur les plaques 3.

La figure 2 représente une vue en perspective schématique d'une partie de fuselage 1 selon un premier mode de réalisation de l'invention. Un raidisseur 4 a, en coupe transversale, une forme en oméga. Plus précisément, un raidisseur 4 comporte un support de tête 8 et une tête 9. Le support de tête 8 s'étend latéralement de chaque côté de la tête 9 d'un raidisseur 4. Le support de tête 8 comporte une première semelle 10 s'étendant d'un côté de la tête 9 et une deuxième semelle 11 s'étendant du côté opposé à la première semelle 10 de la tête 9. La première semelle 10 et la deuxième semelle 11 s'étendent parallèlement à la surface d'une peau 7 recouvrant la paroi interne du fuselage 1.

La tête 9 comporte deux flancs et une partie supérieure. Un premier flanc 12 forme un plan incliné par rapport à la première semelle 10. Ce premier flanc 12 relie la première semelle 10 à la partie 13 supérieure de la tête 9. La partie 13 supérieure de la tête 9 forme une surface parallèle à la peau 7 située entre la première semelle 10 et la deuxième semelle 11. Selon la forme de l'invention représentée à la figure 2, la largeur de la partie supérieure 13 est inférieure à la distance séparant les deux semelles 10 et 11. Selon d'autres variantes de l'invention, cette largeur peut être supérieure ou égale à cette distance.

Le deuxième flanc 14 forme un plan incliné par rapport à la deuxième semelle 11. Ce deuxième flanc 14 relie la deuxième semelle 11 à la partie 13 supérieure de la tête 9. La première semelle 10, le premier flanc 12, la partie 13 supérieure de la tête 9, le deuxième flanc 14 et la deuxième semelle 11 donnent au raidisseur 4 une section transversale en oméga. Cependant, cette forme peut aussi être obtenue si la tête 9 ne comporte qu'une unique plaque incurvée reliant la première semelle 10 et la deuxième semelle 11.

Selon l'invention, le fuselage 1 comporte des éclisses 15. Une éclisse 15 est située à chaque intersection entre un cadre de renfort 5 et un raidisseur 4. Une telle éclisse 15 est située entre la peau 7 et le cadre de renfort 5. Plus particulièrement, une telle éclisse recouvre la peau 7 au niveau dé l'intersection entre un cadre 5 de renfort et un raidisseur 4. Cette éclisse 15 effectue la jonction entre deux sections 6 consécutives de raidisseur 4, le cadre de renfort 5 prenant appui sur cette éclisse 15.

L'éclisse 15 recouvre les extrémités 16 de deux sections 6 consécutives d'un raidisseur 4. Plus particulièrement, cette éclisse 15 comporte une lamelle 17 s'étendant en recouvrant une semelle 10, et une paroi 18 s'étendant en recouvrant un flanc 12 de la tête du raidisseur.

Une telle éclisse 15 évite de mettre en place de plis dans la peau 7. Cette absence de plis facilite l'installation des raidisseurs 4, à l'endroit des intersections entre les raidisseurs 4 et les cadres 5 de renfort. De plus, cette éclisse 15 permet un cheminement d'efforts efficace entre deux sections 6 consécutives.

Par ailleurs, de telles éclisses 15 peuvent être intégralement réalisées en matériaux composites, sans présence de parties métalliques. De telles éclisses 15 évitent les problèmes thermique et de corrosion liés à la présence de parties métalliques.

Selon l'invention, après l'interruption des raidisseur 4, les éclisses 15 s'étendent latéralement de manière à former ensemble une surface 19 plane et continue sur laquelle est appuyée, sur toute sa surface d'appui, le cadre 5 de renfort. Les éclisses 15 ne présentent, sous le cadre de renfort 5, aucune variation d'épaisseur. Cette absence de variation d'épaisseur permet une installation simple du cadre 5 de renfort dans le fuselage 1 tout en lui assurant un appui stable.

L'invention comporte plusieurs modes de réalisations possibles pour les éclisses 15.

Un premier mode de réalisation prévoit qu'une lamelle 17 d'une première éclisse 20 recouvre une première semelle 10 d'une première extrémité 21 d'une première section 22 d'un raidisseur 4. Une paroi 18 de cette première éclisse 20 recouvre également un premier flanc 12 de la tête 9 de cette première extrémité 21.

Au niveau de l'interruption de la première section 22 du raidisseur 4, la première éclisse 20 s'étend latéralement, c'est-à-dire perpendiculairement à l'axe 100 du fuselage, jusqu'à recouvrir la peau 7 sur une largeur 35 s'étendant entre un axe 101 longitudinal du raidisseur 4 jusqu'au milieu d'une bande, de largeur 23, séparant deux raidisseurs 4 côte à côte. Par ailleurs, parallèlement à l'axe 100 du fuselage 1, la première éclisse 20 s'étend sous le cadre 5 de renfort jusqu'à atteindre une deuxième section 24 du raidisseur 4 consécutive à la première section 22. Cette première éclisse 20 fait la jonction entre la première extrémité 21 et une deuxième extrémité 25 respectivement de la première section 22 et de la deuxième section 24.

Au niveau du début de la deuxième section 24 du raidisseur 4, la largeur de la première éclisse 20 se réduit. La première éclisse 20 vient donc recouvrir l'extrémité 25 de cette deuxième section 24 de la même manière qu'elle recouvre l'extrémité 21 de la première section 22, c'est à dire qu'une lamelle 17 de la première éclisse 20 recouvre une première semelle 10 et une paroi 18 de la première éclisse 20 recouvre un premier flanc 12 de l'extrémité 25.

Dans ce mode de réalisation de l'invention, la première éclisse 20 et une deuxième éclisse 26 se situent de part et d'autre d'un même raidisseur 4. La deuxième semelle 11 et le deuxième flanc 14 de la tête 9 sont respectivement recouverts par une lamelle 17 et une paroi 18 de la deuxième éclisse 26. Cette deuxième éclisse 26 s'étend symétrique à la première éclisse 20 par rapport à un plan de symétrie du raidisseur 4.

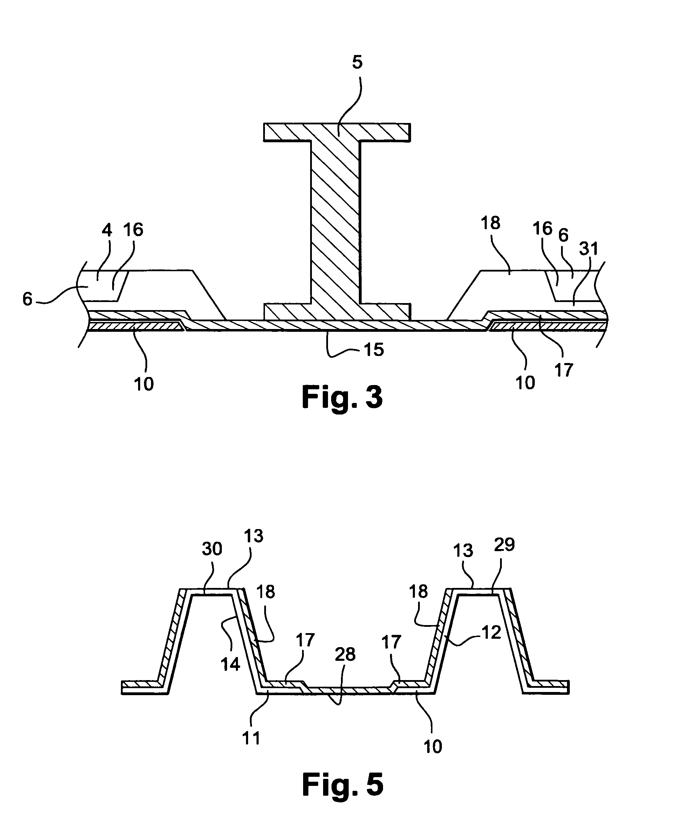

La figure 3 représente une vue en coupe transversale d'une intersection entre un cadre de renfort et un raidisseur selon l'invention. Au niveau d'un cadre 5 de renfort, le raidisseur 4 est interrompu ; il est donc divisé en sections (22, 24). Les extrémités 21 et 25 desdites sections sont munies d'éclisses 15. L'ensemble des éclisses 15 recouvre alors la totalité de la peau 7, ou des plaques 3 de fuselage, entre deux sections 22 et 24 des raidisseurs 4, sur toute la surface d'appui du cadre 5 de renfort.

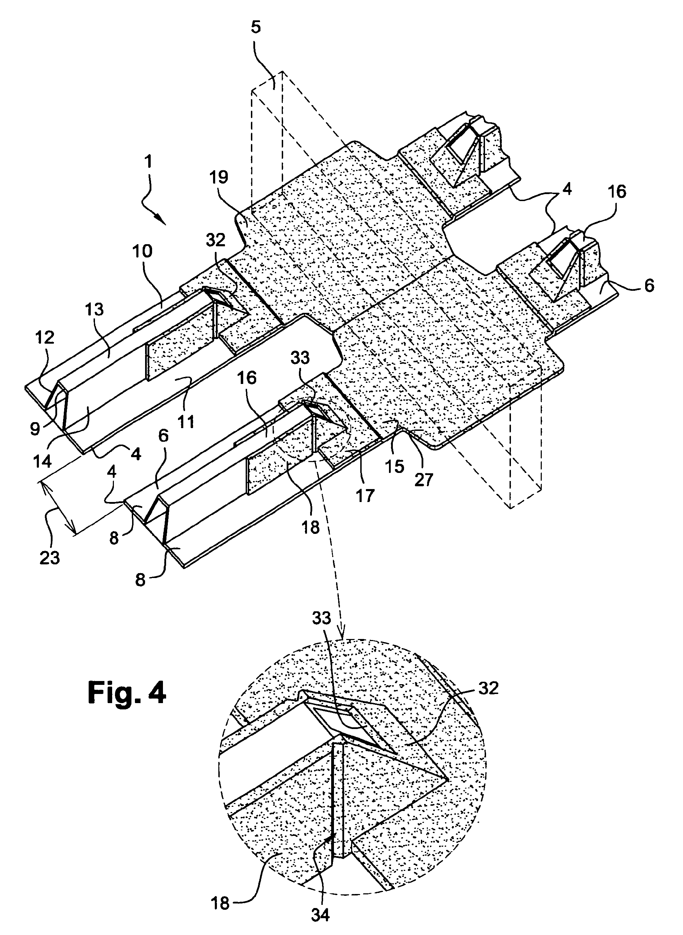

La figure 4 représente une vue en perspective schématique d'une partie de fuselage selon un deuxième mode de réalisation de l'invention. Ce deuxième mode de réalisation réunit, en une seule éclisse 27, les deux éclisses 20 et 26 représentées à la figure 2. Cette éclisse 27 recouvre les extrémités 21 et 25 du raidisseur 4 de la même manière que les éclisses 20 et 26 réunies. Par ailleurs, cette éclisse 27 recouvre la même surface de peau 7, ou de plaque 3, que les éclisses 20 et 26 réunies.

La figure 5 représente une vue en coupe transversale d'un raidisseur et d'une éclisse selon un troisième mode de réalisation de l'invention. Selon ce mode de réalisation, une éclisse 28 recouvre une première semelle 10 et un premier flanc 12 d'un premier raidisseur 29. Cette même éclisse 28 recouvre aussi une deuxième semelle 11 et un deuxième flanc 14 d'un deuxième raidisseur 30. Le premier raidisseur 29 et le deuxième raidisseur 30 sont disposés parallèlement et côte à côte dans le fuselage 1. Une telle éclisse 28 recouvre la même surface de peau 7 qu'une éclisse 20 d'un premier raidisseur 29 associée à une deuxième éclisse 26 d'un deuxième raidisseur 30, selon le premier mode de réalisation de l'invention décrit ci-dessus.

De telles éclisses 15 peuvent être situées aux extrémités 16 du raidisseur 4 non interrompues par la présence d'un cadre 5 de renfort, c'est à dire au début ou à la fin d'un raidisseur 4. Ces éclisses permettent d'équiper les extrémités d'un raidisseur 4. Ces éclisses de début et de fin de raidisseur recouvrent une extrémité 16 d'une section 6 de raidisseur 4 correspondant au début ou la fin d'un raidisseur 4, et s'arrêtent sur la peau 7, ou la plaque 3 de fuselage, sans faire de jonction avec une autre extrémité 16 d'une autre section 6. Ces éclisses de début et de fin servent à drainer les flux d'efforts dans le raidisseur 4 en début de raidisseur 4 ou au contraire à diffuser les flux d'efforts du raidisseur 4.

L'invention prévoit par ailleurs deux variantes de cheminement d'efforts.

Dans une première variante, figure 2, les semelles 10 et 11 d'un raidisseur 4 sont interrompues à un niveau plus éloigné du cadre 5 de renfort que la tête 9 du raidisseur. Cette interruption des semelles 10 et 11 à un niveau plus éloigné du cadre de renfort 5 que l'arrêt de la tête 9 du raidisseur 4 permet un déchargement des efforts du raidisseur 4 dans l'éclisse 15, ledit déchargement se faisant d'abord par les semelles 10 et 11, puis par les flancs 12 et 14 de la tête 9 de raidisseur 4, et enfin par la partie supérieur 13 de la tête 9 du raidisseur 4.

Selon cette première variante, l'interruption d'une éclisse 15, c'est à dire le niveau jusqu'auquel une éclisse 15 recouvre l'extrémité 16 d'un raidisseur 4, est plus proche du cadre 5 de renfort sur les flancs 12 et 14 d'une tête 9 que sur les semelles 10 et 11. La paroi 18 d'une éclisse 15 subit alors une réduction importante de sa surface de couverture des flancs de la tête 9 du raidisseur à un niveau plus proche du cadre 5 de renfort que l'interruption de la lamelle 17. Cette paroi 18 s'étend donc après cette réduction sous la forme d'une paroi réduite 31 appuyée sur une faible surface d'un flanc de raidisseur 4 jusqu'à l'interruption complète de l'éclisse 15. La lamelle 17 et la paroi 31 réduite sont interrompue au même niveau.

Dans une deuxième variante, figure 4, la tête 9 du raidisseur 4 est interrompue à un niveau plus éloigné du cadre 5 de renfort que les semelles 10 et 11 du raidisseur 4. Dans cette variante, l'interruption de la tête 9 du raidisseur 4 se fait suivant un plan incliné par rapport à la partie supérieure 13. Selon cette variante de l'invention, l'éclisse 15, en plus de recouvrir les semelles 10 et 11 d'un raidisseur 4 ainsi que les flancs 12 et 14 d'une tête 9 de raidisseur 4, recouvre une partie 32 du plan incliné d'interruption de la tête 9 du raidisseur 4. Ainsi, l'éclisse 15 comporte une butée 33 qui s'étend en recouvrant la tête 9 du raidisseur 4, selon le plan d'inclinaison d'interruption de la tête 9 du raidisseur 4 en prenant appui sur cette tête 9.

Selon cette variante de l'invention, le déchargement des efforts du raidisseur 4 dans l'éclisse 15 se fait d'abord par la partie 13 supérieure de la tête 9 du raidisseur 4, puis par les flancs 12 et 14 de la tête 9, et enfin par les semelles 10 et 11 du raidisseur 4.

Suivant cette deuxième variante, l'interruption d'une éclisse 15 sur une extrémité 16 d'une section 6 d'un raidisseur 4 est plus proche du cadre 5 de renfort sur les semelles 10 et 11 que sur les flancs 12 et 14 d'une tête 9. La paroi 18 s'étend alors jusqu'à un niveau plus éloigné du cadre 5 de renfort que la lamelle 17.

Par ailleurs, l'invention peut prévoir que l'éclisse 15 comporte un moyen de conservation de l'alignement de deux sections 6 de raidisseur consécutives interrompue par un cadre 5 de renfort.

Suivant la deuxième variante, c'est à dire la variante où les semelles 10 et 11 du raidisseurs 4 sont interrompues plus proche du cadre 5 de renfort que la tête 9 du raidisseur 4, l'invention prévoit qu'une zone 34 de la paroi 18 présente une faiblesse en épaisseur au niveau de l'extrémité de la tête 9. Une telle zone 34 faible permet de plier légèrement la paroi 18 afin de conserver un alignement des différentes sections 6 du raidisseur 4. En effet, lors de l'installation des différentes sections 6 d'un raidisseur 4, il est souvent difficile de conserver un alignement parfait des sections 6.

L'avantage d'une telle éclisse 15 repose aussi, selon l'invention, sur les moyens de construction de cette éclisse 15. En effet de nombreux moyens de fabrication et d'installation peuvent être utilisés pour réaliser une éclisse 15 selon l'invention.

Ainsi une éclisse 15 en matériaux composites et une peau 7 selon l'invention peuvent êtres cuites ensemble et en même temps. De même une telle éclisse 15 en matériaux composites et des raidisseurs 4 selon l'invention peuvent êtres cuits ensemble et en même temps. Une autre solution consiste à cuire l'éclisse 15 séparément des raidisseurs 4 et la fixer au raidisseur 4 et à la peau 7 par la suite. Les éclisses 15 peuvent, par exemple être collée sur une peau 7 polymérisée, ou encore boulonnées sur les raidisseurs 4 et la peau 7.

Selon l'invention, les modes de réalisation et variantes d'éclisses décrites ci dessus peuvent être combinées entre elles. Ainsi un raidisseur peut, par exemple, être recouvert d'un côté par une éclisse 20 selon le premier mode de réalisation alors que son autre côté est recouvert par une éclisse 28 selon le troisième mode de réalisation. La combinaison des variantes est aussi envisageable. Un raidisseur peut, par exemple, avoir une première semelle 10 interrompue plus proche du cadre 5 de renfort que la tête 9, la tête 9 étant elle même interrompue plus proche du cadre 5 de renfort que la deuxième semelle 11.

## Revendications

1. Avion comportant :
- des plaques (3) de fuselage (1),
- un raidisseur (4), ayant une section transversale en forme d'oméga, ledit raidisseur (4) s'étendant sur une plaque (3) de fuselage, ou sur une peau (7) recouvrant une paroi interne du fuselage, suivant un axe longitudinal (100) dudit fuselage (1),
- un cadre (5) de renfort situé dans un plan perpendiculaire à l'axe longitudinal du fuselage,
- le raidisseur (4) étant interrompu à l'intersection de la plaque (3) avec le cadre (5) de renfort,
l'interruption du raidisseur (4) séparant ledit raidisseur (4) en deux sections (6),
- au moins une éclisse (15), cette éclisse (15) recouvrant des extrémités (16) des sections (6) de raidisseur (4), cette éclisse (15) joignant deux sections (6) de raidisseur (4) consécutives,
**caractérisé en ce que** l'éclisse (15) est située entre une plaque (3) et le cadre (5) de renfort, ledit cadre (5) prenant appui contre l'éclisse (15).

2. Avion selon la revendication 1, **caractérisé en ce que** l'ensemble des éclisses (15) appuyées contre un cadre (5) de renfort forme une surface d'appui continue pour ledit cadre (5) de renfort.

3. Avion selon l'une des revendications 1 à 2, **caractérisé en ce qu'**une éclisse (15) comporte au moins une lamelle (17) appuyée sur une semelle (10) d'un raidisseur (4) et au moins une paroi (18) appuyée sur un flanc (12) d'une tête (9) dudit raidisseur (4).

4. Avion selon la revendication 3, **caractérisé en ce qu'**une éclisse comporte au moins deux lamelles (17) appuyées sur deux semelles (10,11) et au moins deux parois (18) appuyées sur deux flancs (12,14), les ensembles semelle/flanc (10,12) et (11,14) appartenant au même raidisseur (4), ou appartenant respectivement à deux raidisseurs (29,30) situés parallèles et côte à côte.

5. Avion selon l'une des revendications 1 à 4, **caractérisé en ce qu'**une éclisse (15) est située à une extrémité (16) d'un raidisseur (4), non interrompue par la présence d'un cadre (5) de renfort.

6. Avion selon l'une des revendications 1 à 5, **caractérisé en ce que** l'éclisse (15) comporte une butée (33) qui s'étend selon un plan d'inclinaison d'interruption d'une tête (9) du raidisseur (4) en appui sur cette tête (9).

7. Avion selon l'une des revendications 1 à 6, **caractérisé en ce que** l'éclisse (15) comporte une faiblesse (34) en épaisseur, cette faiblesse (34) étant située sur une paroi (18) de l'éclisse (15) au niveau de l'interruption de la tête (9) du raidisseur (4).

8. Procédé de fabrication d'un avion selon l'une des revendications 1 à 7, **caractérisé en ce qu'**il comporte une étape pendant laquelle des éclisses (15) en matériaux composites et une peau (7) sont cuites ensemble et en même temps.

9. Procédé de fabrication d'un avion selon l'une des revendications 1 à 7, **caractérisé en ce qu'**il comporte une étape pendant laquelle des éclisses (15) en matériaux composites et des raidisseurs (4) en matériaux composites sont cuits ensemble et en même temps.

10. Procédé de fabrication d'un avion selon l'une des revendications 1 à 7, **caractérisé en ce qu'**il comporte une étape pendant laquelle les éclisses (15) sont cuites séparément des raidisseurs (4) et une étape pendant laquelle ces éclisses (15) sont fixés au raidisseur (4) et à la peau (7) ou à la plaque (3).

## Claims

1. An aircraft comprising:
- fuselage (1) plates (3),
- a stiffener (4), having an omega-shaped transverse section, said stiffener (4) extending along a fuselage plate (3) or along a skin (7) covering an inner wall of the fuselage, along a longitudinal axis (100) of said fuselage (1),
- a reinforcing frame (5) located perpendicular to the longitudinal axis of the fuselage,
- the stiffener (4) being interrupted at the intersection of the plate (3) with the reinforcing frame (5),
the interruption of the stiffener (4) separating said stiffener (4) into two sections (6),
- at least one batten (15), this batten (15) covering the ends (16) of the sections (6) of the stiffener (4), this batten (15) joining two consecutive sections (6) of a stiffener (4),
**characterised in that** the batten (15) is located between a plate (3) and the reinforcing frame (5), said frame (5) resting against the batten (15).

2. An aircraft according to claim 1, **characterised in that** all of the battens (15) resting against a reinforcing frame (5) form a continuous support surface for said reinforcing frame (5).

3. An aircraft according to one of claims 1 to 2, **characterised in that** a batten (15) comprises at least one blade (17) supported by a sole plate (10) of a stiffener (4) and at least one wall (18) supported by a side (12) of a head (9) of said stiffener (4).

4. An aircraft according to claim 3, **characterised in that** a batten comprises at least two blades (17) supported by two sole plates (10, 11) and at least two walls (18) supported by two sides (12, 14), the sole plate/side assemblies (10, 12) and (11, 14) belonging to the same stiffener (4) or belonging to two stiffeners (29, 30) respectively, located parallel to each other and side by side.

5. An aircraft according to one of claims 1 to 4, **characterised in that** a batten (15) is located at one end (16) of a stiffener (4), not interrupted by the presence of a reinforcing frame (5).

6. An aircraft according to one of claims 1 to 5, **characterised in that** the batten (15) comprises a stop (33) that extends along an interruption plane of inclination of a head (9) of the stiffener (4) by resting on this head (9).

7. An aircraft according to one of claims 1 to 6, **characterised in that** the batten (15) comprises a lesser thickness (34), this lesser thickness (34) being located on a wall (18) of the batten (15) at the interruption of the head (9) of the stiffener (4).

8. A method for producing an aircraft according to one of claims 1 to 7, **characterised in that** it comprises a step during which the composite material battens (15) and a skin (7) are made together and at the same time.

9. A method for producing an aircraft according to one of claims 1 to 7, **characterised in that** it comprises a step during which the composite material battens (15) and the composite material stiffeners (4) are made together and at the same time.

10. A method for producing an aircraft according to one of claims 1 to 7, **characterised in that** it comprises a step during which the battens (15) are made separately from the stiffeners (4) and a step during which these battens (15) are attached to the stiffener (4) and the skin (7) or the plate (3).

## Patentansprüche

1. Flugzeug, das folgendes enthält:
- Platten (3) für den Rumpf (1),
- eine Versteifung (4) mit einem omegaförmigen Querprofil, wobei sich die besagte Versteifung (4) über eine Platte (3) des Rumpfes oder über eine Hülle (7) erstreckt, die eine Innenwand des Rumpfes in einer Längsachse (100) des besagten Rumpfes (1) überspannt,
- einen Verstärkungsrahmen (5), der sich auf einer Ebene senkrecht zur Längsachse des Rumpfes befindet,
- wobei die Versteifung (4) an der Schnittstelle der Platte (3) mit dem Verstärkungsrahmen (5) unterbrochen ist,
und die Unterbrechung der Versteifung (4) die besagte Versteifung (4) in zwei Abschnitte (6) trennt,
- zumindest eine Lasche (15), wobei diese Lasche (15) die Enden (16) der Abschnitte (6) der Versteifung (4) bedeckt, und diese Lasche (15) zwei aufeinanderfolgende Abschnitte 6) der Versteifung (4) verbindet,
**dadurch gekennzeichnet, dass** die Lasche (15) zwischen einer Platte (3) und dem Verstärkungsrahmen (5) angeordnet ist, und der besagte Rahmen (5) an der Lasche (15) anliegt.

2. Flugzeug nach Anspruch 1, **dadurch gekennzeichnet, dass** die Einheit jener Laschen (15), die an einem Verstärkungsrahmen (5) anliegen, eine durchgehende Anlagefläche für den besagten Verstärkungsrahmen (5) bildet.

3. Flugzeug nach einem der Ansprüche 1 bis 2, **dadurch gekennzeichnet, dass** eine Lasche (15) zumindest ein Federblatt (17) enthält, das an einer Sohle (10) einer Versteifung (4) anliegt, und zumindest eine Wand (18), die an einer Flanke (12) eines Kopfes (9) der besagten Versteifung anliegt.

4. Flugzeug nach Anspruch 3, **dadurch gekennzeichnet, dass** eine Lasche (15) zumindest zwei Federblätter (17) enthält, die an zwei Sohlen (10, 11) anliegen, und zumindest zwei Wände (18), die an zwei Flanken (12, 14) anliegen, wobei die Einheiten Sohle/ Flanke (10, 12) und (11, 14) derselben Versteifung (4) angehören, oder jeweils zwei Versteifungen (29, 30) angehören, die parallel und nebeneinander angeordnet sind.

5. Flugzeug nach einem der Ansprüche 1 bis 4, **dadurch gekennzeichnet, dass** eine Lasche (15) an einem Ende (16) einer Versteifung (4) angeordnet ist, das nicht durch einen vorhandenen Verstärkungsrahmen (5) unterbrochen ist.

6. Flugzeug nach einem der Ansprüche 1 bis 5, **dadurch gekennzeichnet, dass** die Lasche (15) einen Anschlag (33) enthält, der entlang einer Neigungsebene an der Unterbrechung eines Kopfes (9) der Versteifung (4) verläuft, die an diesem Kopf (9) anliegt.

7. Flugzeug nach einem der Ansprüche 1 bis 6, **dadurch gekennzeichnet, dass** die Lasche (15) eine Verjüngung (34) in der Wandstärke aufweist, wobei diese Verjüngung (34) an einer Wand (18) der Lasche (15) im Bereich der Unterbrechung eines Kopfes (9) der Versteifung (4) angeordnet ist.

8. Verfahren zur Herstellung eines Flugzeugs nach einem der Ansprüche 1 bis 7, **dadurch gekennzeichnet, dass** es einen Schritt enthält, bei dem die Laschen (15) aus Verbundmaterial und eine Hülle (7) gemeinsam und gleichzeitig gebrannt werden.

9. Verfahren zur Herstellung eines Flugzeugs nach einem der Ansprüche 1 bis 7, **dadurch gekennzeichnet, dass** es einen Schritt enthält, bei dem die Laschen (15) aus Verbundmaterial und die Versteifungen (4) aus Verbundmaterial gemeinsam und gleichzeitig gebrannt werden.

10. Verfahren zur Herstellung eines Flugzeugs nach einem der Ansprüche 1 bis 7, **dadurch gekennzeichnet, dass** es einen Schritt enthält, bei dem die Laschen (15) getrennt von den Versteifungen (4) gebrannt werden, und einen Schritt, bei dem die Laschen (15) an der Versteifung (4) und an der Hülle (7) oder an der Platte (3) befestigt werden.
